(19) Europäisches Patentamt / European Patent Office / Office européen des brevets

(11) **EP 2 390 152 A1**

(12) **EUROPEAN PATENT APPLICATION**
published in accordance with Art. 153(4) EPC

(43) Date of publication:
**30.11.2011 Bulletin 2011/48**

(51) Int Cl.:
**B60T 8/176** (2006.01)   **B60T 8/174** (2006.01)
**B60T 8/1763** (2006.01)

(21) Application number: **09836109.0**

(22) Date of filing: **29.12.2009**

(86) International application number:
**PCT/ES2009/000601**

(87) International publication number:
**WO 2010/076356 (08.07.2010 Gazette 2010/27)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.12.2008 ES 200900049**

(71) Applicant: **Universidad de Málaga**
**29071 Málaga (ES)**

(72) Inventors:
• **CABRERA CARRILLO, Juan Antonio**
  **E-29071 Malaga (ES)**
• **SIMÓN MATA, Antonio**
  **E-29071 Malaga (ES)**

• **CASTILLO AGUILAR, Juan Jesús**
  **E-29071 Malaga (ES)**
• **ORTÍZ FERNÁNDEZ, Antonio**
  **E-29071 Malaga (ES)**
• **GARCÍA VACAS, Francisco**
  **E-29071 Málaga (ES)**
• **GUERRA FERNÁNDEZ, Antonio**
  **E-29071 Málaga (ES)**

(74) Representative: **Pons Ariño, Angel**
**Pons Patentes y Marcas Internacional, S.L.**
**Glorieta Ruben Dario 4**
**28010 Madrid (ES)**

(54) **AUTOMOBILE BRAKING SYSTEM WITH GRIP PREDICTION AND CONTINUOUS CONTROL OF BRAKING PRESSURE**

(57) The invention relates to an automobile braking system with grip prediction and continuous control of braking pressure, including a hydraulic circuit which regulates braking pressure by controlling a proportional pressure valve (8) which maintains the necessary pressure on the brake piston (6) in order to perform suitable braking. Braking control is permanently performed by a control system capable of recognising actual grip conditions at all times and of establishing the ideal pressure conditions on the braking piston (6), said pressure being under optimal control at all times, ensuring that none of the wheels of the vehicle are subject to excessive skidding. Automobile braking can also be performed manually when the valve (4) is in a standby position or in the event of a malfunction of the automatic braking control

Figure 1

EP 2 390 152 A1

## Description

### Technical field

The present invention is included within the automotive sector, and particularly in the technological area of vehicle braking control systems.

### State of the art

The braking system is one of the most important active safety elements in motor vehicles, and works to reduce speed until its stop, if necessary. The development of braking systems to maintain stability and control of the vehicle, achieving also a braking distance as short as possible, has been a challenge since the motor vehicles began to increase the speed and the power of their engines. At present most manufacturers offer between the equipment options of their vehicles many devices related to brake equipment: antilock brake systems (ABS), Electronic Stability Program (ESP), traction control system (TCS), electro-hydraulic brakes (EHB), electronic brake distribution (EBD), brake assist systems (BAS). All these systems improve the safety of one form or another in the braking process. The optimization of its operation is achieved by developing models, performing tests in test benches and its subsequent checking in motor vehicles.

Among the more widely established systems in vehicles is anti-lock braking systems (ABS-Antilock Brake System). The benefits of incorporating these devices has caused that its installation is highly recommended for virtually all vehicles, and even contemplated as obligatory to a large number of them.

The wheel lock is responsible for the loss of the vehicle directionality, making it impossible for example to avoid an obstacle when the wheels are slipping. This loss of directionality is due to the use of all the grip force between the tyre and road in braking stress, having no effect the guided side stress. The anti-lock braking system achieves improving the efficiency of the vehicle braking systems, improves the stability thereof, and provide a better control and braking progression by controlling the wheel lock. In practice this translates into improved control and directionality of the vehicle in emergency braking process, particularly in low grip conditions and, with it, is achieved in the most cases, a reduction in braking distance.

Conventional ABS systems make use of on-off electrovalves that are responsible for allowing the increase of pressure, and therefore of the braking force on the brake master cylinder, and maintenance of pressure or decrease thereof when occurs a situation of slipping of the wheel. These electrovalves allow a quick and reliable operation of the antilock system. However, the release of pressure in the brake master cylinder is carried out completely by opening the valve.

Another fundamental part of the anti-lock braking systems is the control algorithm that enables the on-off electrovalves. The main problem founded in this algorithm to perform an optimal braking process is to determine the degree of slipping that is occurring in the wheels to operate within the optimum area of the grip curve. In order to know the index slipping it is needed to know the rotation speed of the wheels, the linear velocity of the vehicle and the radius of the tyre. The speed is measured by inductive sensors and thanks to the installation of phonic wheels on wheels. The radius of the tire can be properly estimated by knowing the dimensions of the wheel, its stiffness and vertical load thereon. The main problems are found when trying to calculate or estimate the vehicle speed.

The present invention enables resolve these problems associated with conventional braking systems.

### Detailed description of the invention

The braking system object of the present invention includes a simplified hydraulic circuit with respect to the traditional configuration of a conventional ABS system, and a control system of said hydraulic circuit.

The hydraulic circuit has been simplified in regard to the configuration of traditional ABS since the two-positions and 2-ways valves have been removed and replaced by a proportional valve. This configuration allows that both in moments of pressure reduction and increase, the process is performed in a controlled way and until optimum levels, not being necessary for example the total decrease of pressure in the case of blocking.

As occurs with the traditional systems it must to ensure the operation of the brakes when the ABS fails (due to lack of power supply and malfunction of the control). For this, the present invention comprises a double-effect and three-way valve. This two-position valve is activated by the control unit and in case of malfunction of the control system or loss of voltage, the valve will be disconnected, allowing manual operation of the braking circuit, thus allowing the driver to activate the brake pedal manually.

For its part, the control system comprised in the present invention includes an algorithm to calculate the slipping at any time and determine, using techniques based on fuzzy logic, the characteristics of the area for which the vehicle is traveling and the pressure to be applied on the brake circuit, key factors to ensure the proper operation of antilock system.

The control system acts as an interface between the driver and braking hydraulic circuit, which is why the driver has the sense of being who operates the brake system, although in reality the braking control is established by a control logic in terms of the force that the driver establishes in the brake pedal, and the grip conditions of the road surface. In conclusion, we can speak of an automatic and intelligent braking system.

**Description of the drawings**

Figure 1.- Hydraulic scheme of the braking circuit. Manual mode of operation. In manual mode, the valve (4) is showed in the position to set this kind of manual mode.

Figure 2.- Hydraulic scheme of the braking circuit. Automatic mode of operation. In this figure is showed the valve (4) in the position to set the automatic mode.

Figure 3.- Control scheme of the proportional pressure valve. Block diagram of the braking system, which controls the proportional pressure valve (8)

Figure 4.- Characteristic adhesion curve. Adhesion curves for different types of road or grip conditions.

Figure 5.- Member functions in the control block (14). a) Friction coefficient input b) Slipping input c) Type of road output.

Figure 6.- Obtaining rules in the case of slipping.

Figure 7.- Surface generated by the fuzzy control block for determining the type of road (14).

Figure 8.- Functions of input and output variables to the control block (15). a) Error input variable. b) *diferror* input variable. c) Pressure output variable.

Figure 9.- Output area of the fuzzy control block (15).

**Embodiments of the invention**

Next preferred embodiments of the invention, with non-limitative character, are described and explained.

The braking system object of the present invention preferably comprises two operating modes: manual mode and automatic mode.

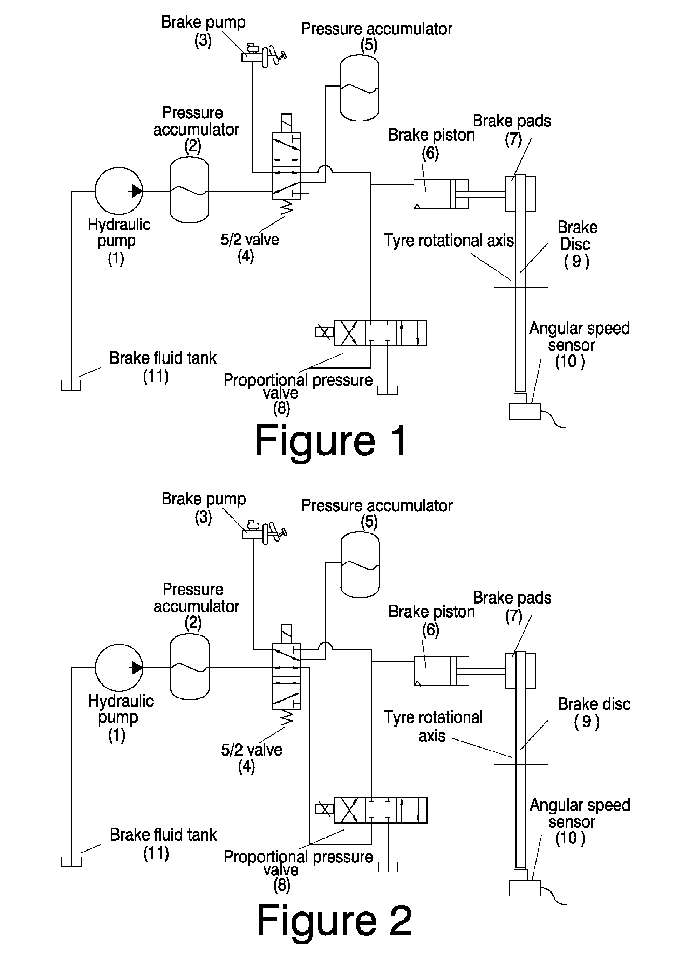

In manual mode (figure 1), the valve 5/2 (4) would be in standby position, with no power supply in that valve (4). The standby position can be induced by a fault in the power supply system (for example, low battery), because the user disables the automatic mode of operation of the automatic braking system, or because the control system of the braking system identifies a malfunction (for example malfunction of the speed sensors (10)). In said standby position, all the pressure exerted by the driver when he/she steps on the brake pedal and the brake pump (3) acts, goes directly to the brake piston (6), pressing the brake pads (7) on the brake disk (9), and thus slowing the vehicle.

In automatic mode (figure 2), la valve (4) is activated by the control system by an electrical signal, disconnecting the hydraulic pressure exerted by the driver through the brake pump (3). So as the driver still has a sense of braking in the brake pedal, the exerted pressure is brought to a pressure accumulator (5), without that said pressure is applied in the main braking circuit, and therefore without emerge effect on the braking of the vehicle. In this automatic mode, is the valve (4) which connects the pressure exerted by the hydraulic pump (1) and it is stored in the pressure accumulator (2), to the main braking circuit. Said pressure is regulated by the pressure valve (8) through the desired control logic and reaches the brake piston (6) acting on the brake pads (7), these pressing the brake disk (9), thus slowing the vehicle.

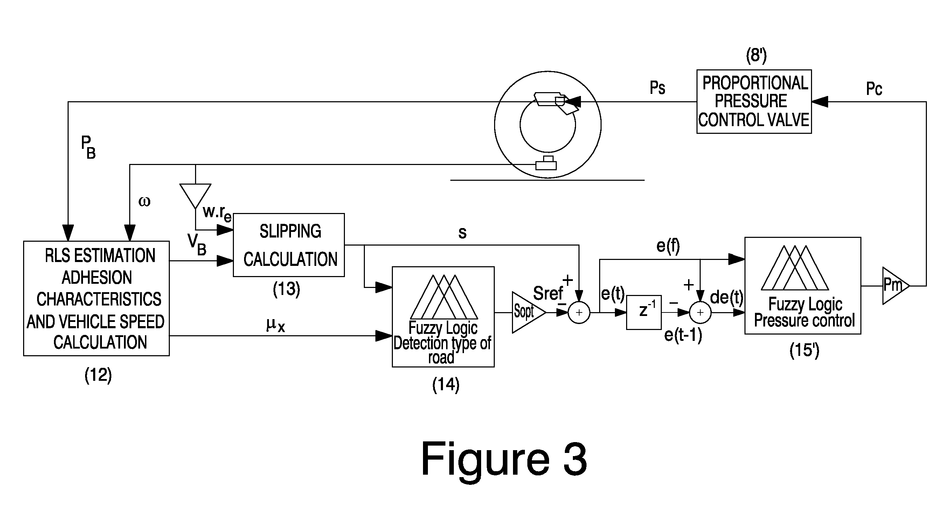

In automatic mode of operation a fundamental feature is the control of the proportional valve (8) (figure 3).

The control system of hydraulic braking circuit is a closed-loop control system and comprises the following fundamental building blocks:

1. Block to estimate the friction coefficient $\mu_X$ and use this value to determine vehicle speed $v_B$ (12). This block takes as input the tyre angular speed $\omega$, which can be obtained from any commercial sensor used (10), and the braking pressure $P_B$, which is calculated by the control system through the block (8'), mathematically modeling the operation of the proportional valve (8), and takes as output the linear speed values of the vehicle $v_B$ and friction coefficient $\mu_X$. The

technique used to estimate the friction coefficient in the contact between the wheel and the road surface is determined by recursive least squares estimation, RLS, with exponential factor. It has been used this technique for its ease of implementation within the mathematical model of vehicle behavior and the speed of calculation, since the algorithm steps have no calculation complexity. To calculate the vehicle speed are used the friction coefficient values obtained for each wheel of the vehicle and with a simple model of the vehicle is obtained an estimated value of the linear speed thereof.

2. Block to obtain the slipping existing at every moment (13). This block takes as input the vehicle speed $v_B$, calculated by the previous block (12) and the linear velocity of the tyre $w \cdot r_e$, and as output the slipping $s$, which is calculated by the equation:

$$s(t) = 1 - \frac{w(t) \cdot r_e}{v_B(t)}$$

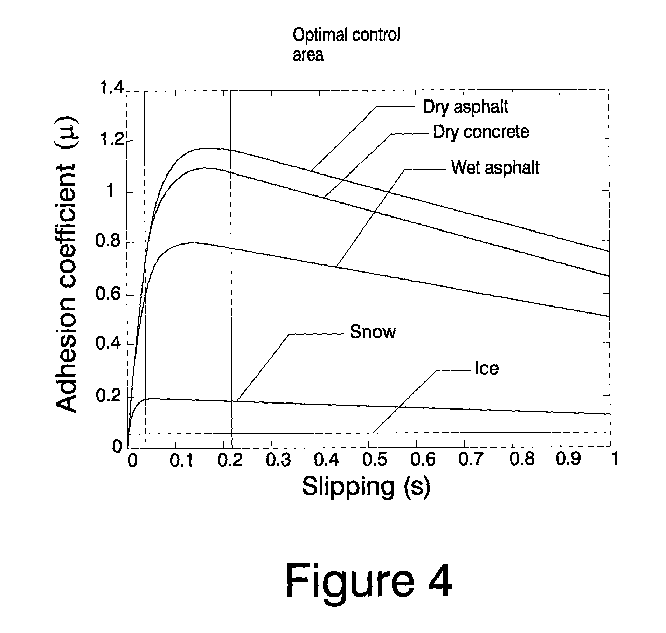

3. *Fuzzy* block to detect the type of road (14). This block takes as input the slipping $s$ and friction coefficient $\mu_X$ and as output a value between [0,1] indicating the type of road and that multiplied by an optimal slipping value $s_{opt}$ to obtain the reference slipping $s_{ref}$. The advantage of using this technique is that the reference slipping value is adapted to the type of contact between the wheel and road surface. And this feature is essential in the braking processes, since the slipping point where each adhesion curve has the maximum friction coefficient varies according to the type of contact between the tyre and the road (figure 4).

**Table 1.- Values of the friction coefficient function**

| Friction coefficient | |
|---|---|
| *MPR* | Very low friction |
| *PR* | Low friction |
| *RM* | Middle friction |
| *RN* | High friction |
| *MUR* | Much friction |

**Table 2.- Values of the slipping function**

| Slipping index | |
|---|---|
| *zero* | Zero slipping |
| *mid* | Middle slipping |
| *high* | High slipping |

**Table 3.-Values of the type road function**

| Road type | |
|---|---|
| *ZRF* | Zero-grip road |
| *SFR* | Low grip road |
| *MRF* | Middle grip road |
| *LRF* | High grip road |
| *ERF* | Very high grip road |

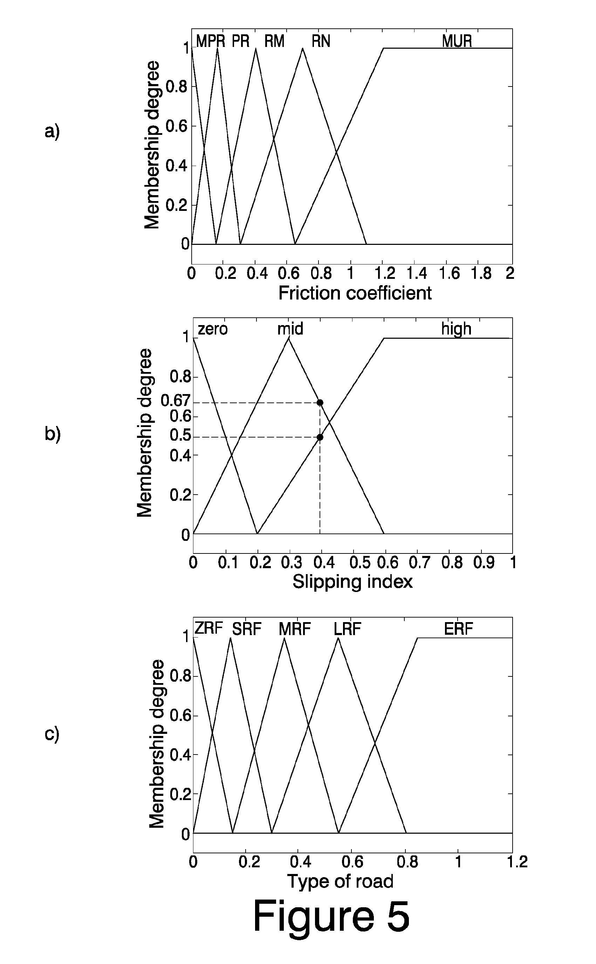

This control block (14) has two input membership functions, 'friction coefficient' and 'slipping index' and an output membership function, 'type of road' (figure 5). For the input variable 'friction coefficient' there are five membership functions, 4 of triangular type and 1 of trapezoidal type; for the input variable 'slipping index' are used 2 of triangular type and 1 of trapezoidal type; and, finally, for the output variable 'type of road' are used 4 of triangular type and 1 of trapezoidal type. The values of the membership functions for the three variables are determined in Tables 1, 2 and 3.

Once we have fuzzy set values, we apply the existing rules within the knowledge base, these rules are of the type *if-them,* and can be activated more than one at a time, because for a value of an input variable we can obtain different degrees of membership for the different fuzzy sets and have logical operators such as *AND, OR* and *NOT* in the antecedent, as in classical logic. In the inference system comprised in the present invention the logical operators are defined as follows:

- Operator AND: (m(slip=mid)=0.67 AND m(slip=high)=0.5) = min(0.67,0.5)

- Operator OR: (m(slip=mid)=0.67 OR m(slip=high)=0.5) = max(0.67,0.5)

- Operator NOT: (NOT m(slip=mid)=0.67) = (1-0.67).

Therefore to resolve the antecedent of all rules that are activated, the above mentioned logical operators are running and once resolved the antecedent of each rule, the implication is executed and the consequent of each of the rules is obtained that are fuzzy sets truncated by the value of the antecedent. These are summed and it is passed to the 'defuzzification' stage, in which it is passed from a fuzzy set to a specific real value (*crisp*). In the case of the present invention has used the centroid method.

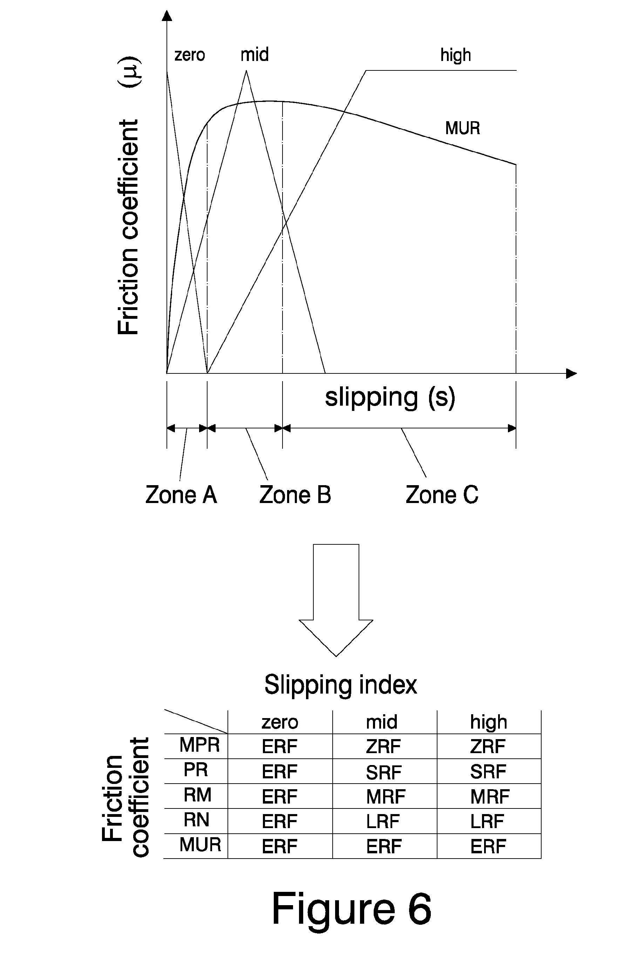

The rules have been obtained according to the slipping behavior within the characteristics adhesion curves (figure 6). These curves have clearly three distinct areas of operation. In area A of the curve, the variation of the slope is always positive and we are within the linear portion of the characteristic adhesion curve; in zone B (zone of maximum friction and in which the brake control must act), the variation of the slope becomes zero, and, finally, in zone C the variation is negative and is when the maximum slipping on the wheel occurs. With this knowledge about the adhesion curves have been established the referred rules.

In relation to the rules of fuzzy control for the input variable slipping index (figure 6), the slipping has been divided into three zones (*zero, middle* and *high*), making them correspond with the three distinct areas of the characteristic adhesion curve explained above. When the slipping is within the zone A of the curve, the type of characteristic curve is the one with higher grip, which means that the type of road that represents is also the one with higher grip. This is because in this part of the characteristic curve, the brake control can increase the braking pressure. Once the slipping enters into the zone B or C, the type of road depends on the value of friction, since the greater the friction is, the greater the grip on the road.

The rules can also be defined in the classic format *if-then* as follows:

1. If (slipping is zero) then (type_road is ERF)
2. If (friction is MUR) then (type_road is ERF)
3. If (friction is RN) and (slipping is mid) then (type_road is LRF)
4. If (friction is RM) and (slipping is mid) then (type_road is MRF)
5. If (friction is PR) and (slipping is mid) then (type_road is SRF)
6. If (friction is MPR) and (slipping is mid) then (type_road is ZRF)
7. If (friction is RN) and (slipping is high) then (type_road is LRF)
8. If (friction is RM) and (slipping is high) then (type_road is MRF)
9. If (friction is PR) and (slipping is high) then (type_road is SRF)
10. If (friction is MPR) and (slipping is high) then (type_road is ZRF)

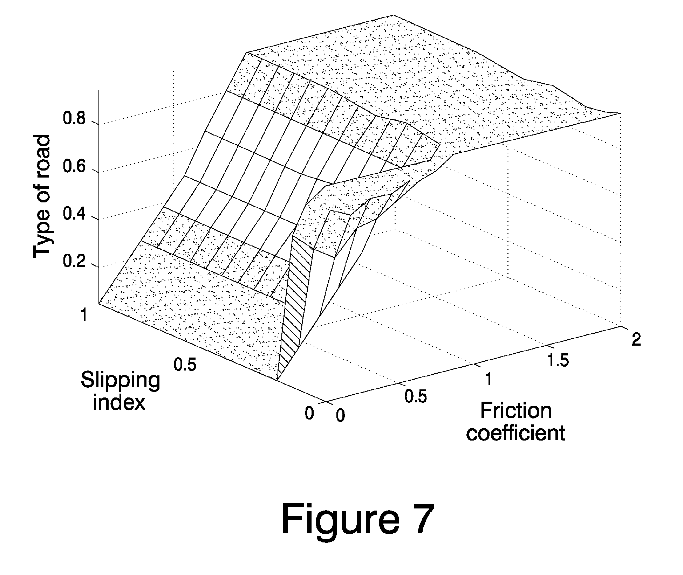

Once the rules have been established it can be represented the surface generated by the inference system with the different values of output variables and the input variable (figure 7). When the slipping is zero the type of road is the one with higher grip and has minimum grip when the slipping starts to be a positive number greater than 0.2 and the friction is very low. The control system determines, based on the blocks (12), (13) and (14), the slipping in which the maximum friction coefficient is produced, according to the contact between the wheel and road. The type of road which has as output a value between 0 and 1, with the value 1 for the road with greater grip and 0 the lowest; and in the same way, the value of the slipping index at the point wherein the friction coefficient is maximum also decreases when the adhesion of the road decreases (figure 4). As a final result of the control system operation, it is established an adaptive behavior of the reference slipping value $s_{ref}(t)$, since this value will decrease when decrease the conditions of grip of the road.

4. *Fuzzy* control block of the braking pressure (15). This control takes as input the error between the slipping at that moment $s(t)$ and the reference slipping $s_{ref}(t)$ calculating from the block which obtains the type of road (14) and the variation of this error in an instant of time; and the output is a value between [0,1] indicating the standard pressure in the braking circuit.

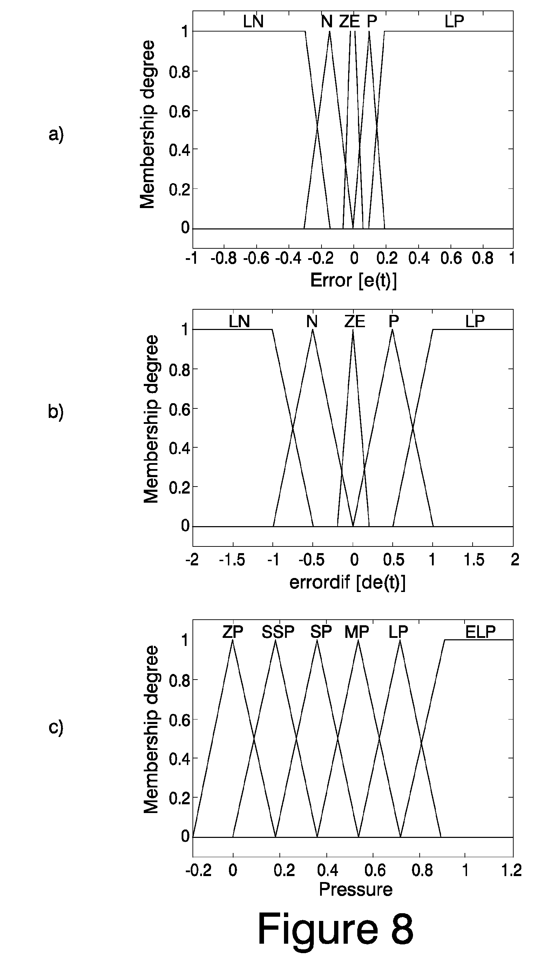

The input variables have the following ranges: for the error $e(t)$, is established a range of [-1 1], since the slipping values are always within the range [0,1]; for the error of the difference $de(t)$, is established a range between [-2 2]; for the output variable is established a range between [-0.2, 1.2]. So that the specific values of braking pressure established by the inference system, are in the range [0,1], and to obtain the value of the pressure in the braking circuit only it must multiply the output value of the control by the maximum pressure of the braking system. For the input variable 'error' have been used 3 triangular membership functions and 2 trapezoidal membership functions. It should be noted, in relation to the membership functions for the established parameters (figure 8), that the membership functions N (negative) and LN (large negative) are not symmetric with respect to the functions P (positive) y LP (large positive), being due to the existing difference between the reference slipping $s_{ref}(t)$ and slipping at that moment $\hat{s}(t)$ is not of the same order, since the reference slipping does not reach more from 0-0.3 of value, and therefore negative values of the error will be larger than those positive. For the input variable *errordif* have been established 3 membership functions of triangular type and 2 of trapezoidal type. For the output variable are established in turn 5 membership functions of triangular type and 1 of trapezoidal type that define the whole output range of the pressure variable, within the range [0,1]. Therefore, to achieve that the pressure is maintained within this range is necessary that the functions ZP (zero pressure) and ELP (extremely large pressure) exceed these limits (figure 8). This is because the inference system used for this control block (15) uses for the 'defuzzification' process the operator centroid, which calculates the center of gravity of the membership functions truncated for the antecedent of the rule that is activated. The values of the variables are defined in tables 4, 5 and 6.

**Table 4.- Values of error input variable**

| error [e(t)] | |
|---|---|
| **LN** | Large negative error |
| **N** | Negative error |
| **ZE** | Zero error |
| **P** | Positive error |
| **LP** | Large positive error |

**Table 5.- Values of *errordif* input variable**

| errordif [de(t)] | |
|---|---|
| **LN** | Large negative difference |
| **N** | Negative difference |
| **ZE** | Zero difference |
| **P** | Positive difference |
| **LP** | Large positive difference |

**Table 6.- Values of pressure output variable**

| pressure | |
|---|---|
| **ZP** | Zero pressure |
| **SSP** | Very small pressure |

(continued)

| pressure | |
|---|---|
| SP | Small pressure |
| MP | Middle pressure |
| LP | Large pressure |
| ELP | Extremely large pressure |

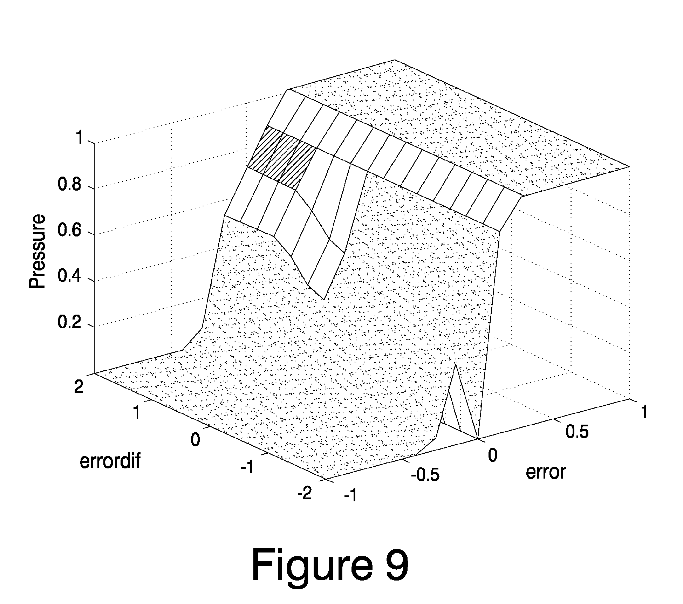

Once the input variables to the control and the output variable have been established, being able to represent the surface that generates the inference system with different values of said variables (figure 9), it is described the behavior required by the control in order to define the rules that govern it. The rules are defined in the following form or according to the table 7:

1. If (error is LP) then (pressure is ELP)
2. If (error is P) then (pressure is LP)
3. If (error is LN) then (pressure is ZP)
4. If (error is N) and (errordif is LP) then (pressure is MP)
5. If (error is N) and (errordif is P) then (pressure is SP)
6. If (error is N) and (errordif is ZE) then (pressure is SSP)
7. If (error is N) and (errordif is LN) then (pressure is SP)
8. If (error is N) and (errordif is N) then (pressure is SSP)
9. If (error is ZE) and (errordif is LP) then (pressure is LP)
10. If (error is ZE) and (errordif is P) then (pressure is MP)
11. If (error is ZE) and (errordif is ZE) then (pressure is SSP)
12. If (error is ZE) and (errordif is N) then (pressure is SSP)
13. If (error is ZE) and (errordif is LN) then (pressure is ZP)

error [e(t)]

| | | LN | N | ZE | P | LP |
|---|---|---|---|---|---|---|
| errordif [de(t)] | LN | ZP | SP | ZP | LP | ELP |
| | N | ZP | SSP | SSP | LP | ELP |
| | ZE | ZP | SSP | SSP | LP | ELP |
| | P | ZP | SP | MP | LP | ELP |
| | LP | ZP | MP | LP | LP | ELP |

## Table 7.- Rules of the fuzzy control block (15).

One of the characteristics of the control system comprised in the present invention is that it does not use new sensors that are not available in conventional ABS systems. That is the control system developed only uses, as a variable measured by an external sensor, the angular velocity of the wheel, which is measured by the sensor (10). The other parameters necessary for the proper operation of the braking system, are calculated by the different blocks described.

**Claims**

1.    Automobile braking system with grip prediction and continuous control of braking pressure **characterized in that** comprises a simplified hydraulic circuit with respect to the traditional configuration of a conventional ABS system and a control system of said hydraulic circuit, said hydraulic circuit comprising:

    a. A proportional pressure valve (8), replacing the 2 two-position and 2-ways valves present in a conventional ABS system, and allowing that both in times of pressure reduction and increase, the process is performed in a controlled way and up to optimum levels, not being necessary for example the total reduction of pressure in the case of blocking.

b. A double-effect valve and three-ways, with two positions (4), activatable by the control system of hydraulic circuit and deactivatable when the braking system is malfunctioning or when the user so chooses.

2. Automobile braking system with grip prediction and continuous control of braking pressure according to the preceding claim **characterized in that** the control system of hydraulic circuit includes an algorithm to calculate the slipping at any time and determine, by using techniques based on fuzzy logic, the characteristics of the surface for which the vehicle is traveling and the pressure to be applied in the brake circuit.

3. Automobile braking system with grip prediction and continuous control of braking pressure according to the preceding claim **characterized in that** preferably comprises two operating modes: manual mode and automatic mode.

4. Automobile braking system with grip prediction and continuous control of braking pressure according to the preceding claim **characterized in that**, in manual mode, the valve 5/2 (4) would be in standby position, with no power supply **in that** valve (4), being able to be induced said standby position by a failure in the power supply system (for example, low battery), because the user disables the automatic mode of operation of the automatic braking system, or because the control system of the braking system identifies a malfunction (for example malfunction of the speed sensors (10)).

5. Automobile braking system with grip prediction and continuous control of braking pressure according to the preceding claim **characterized in that** when said valve (4) is in standby position, all the pressure exerted by the driver when he/she steps on the brake pedal and the brake pump (3) acts, goes directly to the brake piston (6), pressing the brake pads (7) on the brake disk (9), thus slowing the vehicle.

6. Automobile braking system with grip prediction and continuous control of braking pressure according to any of claims 3 through 5 **characterized in that**, in automatic mode, the valve (4) is activated by the control system by an electrical signal, disconnecting the hydraulic pressure exerted by the driver through the brake pump (3), this pressure being transferred to a pressure accumulator (5), being the valve (4) which connects the pressure exerted by the hydraulic pump (1), and it is stored in the pressure accumulator (2), to the main braking circuit.

7. Automobile braking system with grip prediction and continuous control of braking pressure according to the preceding claim **characterized in that** the pressure exerted by the hydraulic pump (1), and which is stored into the pressure accumulator (2), is regulated by the pressure valve (8) through the desired control logic and reaches the brake piston (6) acting on the brake pads (7), these pressing the brake disk (9), thus slowing the vehicle.

8. Automobile braking system with grip prediction and continuous control of braking pressure according to any of claims 2 a 7 **characterized in that** the control system of hydraulic braking circuit is a closed-loop control system and comprises the following fundamental building blocks:

a. Block to estimate the friction coefficient $\mu_X$ and use this value to determine vehicle speed $v_B$ (12),
b. Block to obtain the slipping existing at every moment (13),
c. *Fuzzy* block to detect the type of road (14),
d. *Fuzzy* control block of the braking pressure (15).

9. Automobile braking system with grip prediction and continuous control of braking pressure according to the preceding claim **characterized in that** the block (12) takes as input the tyre angular speed $\omega$, which can be obtained from any commercial sensor used (10), and the braking pressure $P_B$, which is calculated by the control system through the block (8'), mathematically modeling the operation of the proportional valve (8), and takes as output the linear speed values of the vehicle $v_B$ and friction coefficient $\mu_X$.

10. Automobile braking system with grip prediction and continuous control of braking pressure according to the preceding claim **characterized in that**:

a. The friction coefficient in the contact between the wheel and the road surface is determined by recursive least squares estimation, RLS, with exponential factor,
b. The vehicle speed is calculated based on the friction coefficient values obtained for each wheel of the vehicle, being obtained an estimated value of the linear speed of the vehicle by a simple model thereof.

11. Automobile braking system with grip prediction and continuous control of braking pressure according to any of claims 8 a 10 **characterized in that** the block (13) takes as input the vehicle speed $v_B$, calculated by the previous block (12) and the linear velocity of the tyre $w \cdot r_e$, and as output the slipping $s$, which is calculated by the equation:

$$s(t) = 1 - \frac{w(t) \cdot r_e}{v_B(t)}$$

**12.** Automobile braking system with grip prediction and continuous control of braking pressure according to any of claims 8 a 11 **characterized in that** block (14) takes as input the slipping $s$ and friction coefficient $\mu_X$, and as output a value between [0,1] indicating the type of road and that multiplied by an optimal slipping value $s_{opt}$ allows to obtain the reference slipping $s_{ref}$.

**13.** Automobile braking system with grip prediction and continuous control of braking pressure according to the preceding claim **characterized in that** the block (14) has two input membership functions, 'friction coefficient' and 'slipping index' and an output membership function, 'type of road'; existing: for the input variable 'friction coefficient', five membership functions, 4 of triangular type and 1 of trapezoidal type; for the input variable 'slipping index', 2 of triangular type and 1 of trapezoidal type; and, for the output variable 'type of road', 4 of triangular type and 1 of trapezoidal type.

**14.** Automobile braking system with grip prediction and continuous control of braking pressure according to the preceding claim **characterized in that** the rules determining the block (14) are:

    1. If (slipping is zero) then (type_road is ERF)
    2. If (friction is MUR) then (type_road is ERF)
    3. If (friction is RN) and (slipping is mid) then (type_road is LRF)
    4. If (friction is RM) and (slipping is mid) then (type_road is MRF)
    5. If (friction is PR) and (slipping is mid) then (type_road is SRF)
    6. If (friction is MPR) and (slipping is mid) then (type_road is ZRF)
    7. If (friction is RN) and (slipping is high) then (type_road is LRF)
    8. If (friction is RM) and (slipping is high) then (type_road is MRF)
    9. If (friction is PR) and (slipping is high) then (type_road is SRF)
    10. If (friction is MPR) and (slipping is high) then (type_road is ZRF)

**15.** Automobile braking system with grip prediction and continuous control of braking pressure according to any of claims 8 through 14 **characterized in that** the block (15) takes as input the error between the slipping at that moment $s$ ($t$) and the reference slipping $s_{ref}(t)$ calculating from the block (14) and the variation of this error in an instant of time; and the output is a value between [0,1] indicating the standard pressure in the braking circuit.

**16.** Automobile braking system with grip prediction and continuous control of braking pressure according to the preceding claim **characterized in that** the input and output of the block (15) have the following technical features:

    a. For the error $e(t)$ is established a range of [-1 1], and 3 triangular membership functions and 2 trapezoidal membership functions are used;
    b. For the variable *errordif* or error of the difference, $de(t)$, is established a range between [-2 2]; and 3 triangular-type membership functions and 2 trapezoidal-type membership functions are established;
    c. For the output variable is established a range between [-0,2, 1,2], and 5 triangular-type membership functions and 1 of trapezoidal type defining the whole of the output range of the pressure variable, within the range [0,1].

**17.** Automobile braking system with grip prediction and continuous control of braking pressure according to the preceding claim **characterized in that** the rules determining the behavior of the block (15) are:

    1. If (error is LP) then (pressure is ELP)
    2. If (error is P) then (pressure is LP)
    3. If (error is LN) then (pressure is ZP)
    4. If (error is N) and (errordif is LP) then (pressure is MP)
    5. If (error is N) and (errordif is P) then (pressure is SP)
    6. If (error is N) and (errordif is ZE) then (pressure is SSP)
    7. If (error is N) and (errordif is LN) then (pressure is SP)

8. If (error is N) and (errordif is N) then (pressure is SSP)
9. If (error is ZE) and (errordif is LP) then (pressure is LP)
10. If (error is ZE) and (errordif is P) then (pressure is MP)
11. If (error is ZE) and (errordif is ZE) then (pressure is SSP)
12. If (error is ZE) and (errordif is N) then (pressure is SSP)
13. If (error is ZE) and (errordif is LN) then (pressure is ZP)

Brake pump
(3)

Pressure accumulator
(5)

Pressure
accumulator
(2)

Brake piston
(6)

Brake pads
(7)

Hydraulic
pump
(1)

5/2 valve
(4)

Tyre rotational axis

Brake
Disc
(9)

Brake fluid tank
(11)

Proportional pressure
valve
(8)

Angular speed
sensor
(10)

# Figure 1

Brake pump
(3)

Pressure accumulator
(5)

Pressure
accumulator
(2)

Brake piston
(6)

Brake pads
(7)

Hydraulic
pump
(1)

5/2 valve
(4)

Tyre rotational
axis

Brake disc
(9)

Brake fluid tank
(11)

Proportional pressure
valve
(8)

Angular speed
sensor
(10)

# Figure 2

Figure 3

Figure 4

Figure 5

Figure 6

| Friction coefficient \ Slipping index | zero | mid | high |
|---|---|---|---|
| MPR | ERF | ZRF | ZRF |
| PR | ERF | SRF | SRF |
| RM | ERF | MRF | MRF |
| RN | ERF | LRF | LRF |
| MUR | ERF | ERF | ERF |

Figure 7

Figure 8

Figure 9

# INTERNATIONAL SEARCH REPORT

| | International application No. |
|---|---|
| | PCT/ ES 2009/000601 |

**A. CLASSIFICATION OF SUBJECT MATTER**

see extra sheet

According to International Patent Classification (IPC) or to both national classification and IPC

**B. FIELDS SEARCHED**

Minimum documentation searched (classification system followed by classification symbols)

B60T 8/176, B60T 8/174, B60T 8/1763

Documentation searched other than minimum documentation to the extent that such documents are included in the fields searched

Electronic data base consulted during the international search (name of data base and, where practicable, search terms used)

INVENES,EPODOC

**C. DOCUMENTS CONSIDERED TO BE  RELEVANT**

| Category* | Citation of document, with indication, where appropriate, of the relevant passages | Relevant to  claim No. |
|---|---|---|
| A | EP 0594860 A1 (MITSUBISHI MOTOR CORP)  04.05.1994<br>claims 1,7,8,11,12,19; figures 1,8,21 | 1,2 |
| A | GB 1278892 A (BENDIX CORP) 21.06.1972<br>page 2, line 48 - page 3, line 39; figure 1 | 1 |
| A | US 6272421 B1 (MERTENS) 07.08.2001<br>the whole document | 8,9 |
| A | US 6125314 A (GRAF et al.) 26.09.2000 | |
| A | US 5634698 A (CAO et al.) 03.06.1997 | |

☐ Further documents are listed in the continuation of Box C.  ☒ See patent family annex.

| | |
|---|---|
| *  Special categories of cited documents:<br>"A"  document defining the general state of the art which is not considered to be of particular relevance.<br>"E"  earlier document but published on or after the international filing date<br>"L"  document which may throw doubts on priority claim(s) or which is cited to establish the publication date of another citation or other special reason (as specified)<br>"O"  document referring to an oral disclosure use, exhibition, or other means<br>"P"  document published prior to the international filing date but later than the priority date claimed | "T"  later document published after the international filing date or priority date and not in conflict with the application but cited to understand the principle or theory underlying the invention<br><br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other documents , such combination being obvious to a person skilled in the art<br>"&"  document member of the same patent family |

| Date of the actual completion of the international search | Date of mailing of the international search report |
|---|---|
| 28.May.2010       (28.05.2010) | **(01/06/2010)** |
| Name and mailing address of the ISA/<br>O.E.P.M.<br><br>Paseo de la Castellana, 75 28071 Madrid, España.<br>Facsimile No.   34 91 3495304 | Authorized officer<br><br>  F. García Sanz<br><br>Telephone No. +34 91 349 53 51 |

Form PCT/ISA/210 (second sheet) (July 2009)

## INTERNATIONAL SEARCH REPORT

Information on patent family members

| International application No. |
|---|
| PCT/ ES 2009/000601 |

| Patent document cited in the search report | Publication date | Patent family member(s) | Publication date |
|---|---|---|---|
| EP 0594860 A1 | 04.05.1994 | WO 9311007 A | 10.06.1993 |
| | | JP 5147518 A | 15.06.1993 |
| | | JP 2668750 B | 27.10.1997 |
| | | JP 6016116 A | 25.01.1994 |
| | | EP 19920924021 | 27.11.1992 |
| | | US 5480221 A | 02.01.1996 |
| | | KR 0159788 B | 01.12.1998 |
| | | DE 69229634 T | 24.02.2000 |
| GB 1278892 A | 21.06.1972 | DE 2021185 AB | 26.11.1970 |
| | | FR 2042585 AB | 12.02.1971 |
| | | US 3574417 A | 13.04.1971 |
| | | DE 1957059 A | 19.05.1971 |
| | | FR 2067805 A | 20.08.1971 |
| | | US 3602553 A | 31.08.1971 |
| | | GB 1280879 A | 05.07.1972 |
| | | ES 379637 A | 01.08.1972 |
| | | SE 361443 B | 05.11.1973 |
| | | JP 49019757 B | 20.05.1974 |
| US 6272421 B1 | 07.08.2001 | EP 0985586 AB | 15.03.2000 |
| | | EP 19990116801 | 01.09.1999 |
| | | JP 2000085563 A | 28.03.2000 |
| US 6125314 A | 26.09.2000 | WO 9822304 A | 28.05.1998 |
| | | DE 19648055 A | 04.06.1998 |
| | | EP 0883510 AB | 16.12.1998 |
| | | EP 19970949878 | 07.11.1997 |
| | | JP 11507310 T | 29.06.1999 |
| | | JP 3206662 B | 10.09.2001 |
| US 5634698 A | 03.06.1997 | DE 4405379 A | 24.08.1995 |
| | | JP 7257350 A | 09.10.1995 |

Form PCT/ISA/210 (patent family annex) (July 2009)

**INTERNATIONAL SEARCH REPORT**

International application No.

PCT/ ES 2009/000601

CLASSIFICATION OF SUBJECT MATTER

***B60T 8/176*** (2006.01)
***B60T 8/174*** (2006.01)
***B60T 8/1763*** (2006.01)